## Europäisches Patentamt
## European Patent Office
## Office européen des brevets

(19)

(11) Veröffentlichungsnummer: **0 175 087**
**B1**

(12) **EUROPÄISCHE PATENTSCHRIFT**

(45) Veröffentlichungstag der Patentschrift:
03.02.88

(51) Int. Cl.⁴: **G 01 L 5/00**

(21) Anmeldenummer: **85109096.9**

(22) Anmeldetag: **20.07.85**

(54) **Kraftmessvorrichtung.**

(30) Priorität: **26.07.84 DE 3427642**

(43) Veröffentlichungstag der Anmeldung:
**26.03.86 Patentblatt 86/13**

(45) Bekanntmachung des Hinweises auf die Patenterteilung:
**03.02.88 Patentblatt 88/5**

(84) Benannte Vertragsstaaten:
**BE FR GB IT NL SE**

(56) Entgegenhaltungen:
**CH-A-405 116**
**DE-B-1 069 402**
**US-A-4 327 591**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Promm, Reinhard, Fasanenweg 7d, D-8038 Gröbenzell (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

EP 0 175 087 B1

## Beschreibung

Die Erfindung bezieht sich auf eine Vorrichtung zum Messen der zwischen zwei Spannflächen einer Spannvorrichtung wirkenden Kraft, nach dem Oberbegriff von Patentanspruch 1.

Eine bekannte Kraftmeßvorrichtung dieser Art weist beispielsweise einen Ringkolben mit einer über das Gehäuse vorstehenden kreisförmigen Abstützfläche auf, der in einem entsprechend ringzylindrischen Drucköraum des Gehäuses verschiebbar ist. Der Drucköraum steht mit einem Rohrfeder-Manometer in Verbindung.

Es sind ferner Kraftmeßvorrichtungen bekannt, bei denen piezoelektrische Druckaufnahmeglieder oder elastisch verformbare und mit Dehnungsmeßstreifen versehene Druckaufnahmeglieder Verwendung finden.

Diese Kraftmeßvorrichtungen haben sich in vielen Einsatzfällen bewährt. Es gibt jedoch Anwendungsfälle, für die sie noch nicht befriedigen. Soll beispielsweise die zwischen einem Zuganker und einer Gegenplatte wirksame Kraft gemessen werden, so ist es schwierig, die Kraftmeßvorrichtungen richtig anzusetzen, um ein zuverlässiges Meßergebnis zu erhalten.

Es ist daher Aufgabe der Erfindung, eine Kraftmeßvorrichtung der eingangs genannten Art zu schaffen, die auch für die Messung der von Spannankern und ähnlichen Haltemitteln ausgeübten Kräfte auf einfache Weise geeignet ist und ein zuverlässiges Meßergebnis liefert.

Diese Aufgabe wird erfindungsgemäß durch eine Kraftmeßvorrichtung mit den Merkmalen des Patentanspruchs 1 gelöst. Dank der zur Seite des Gehäuses hin offenen Durchbrechung kann das Gehäuse quer zum Schaft des Spannankers auf diesen geschoben werden und der Kopf des Spannankers stützt sich mit seiner Spannfläche beiderseits der Durchbrechung an dem Gehäuse ab. Die Kraftmeßvorrichtung ist sehr einfach positionsgenau zu positionieren und verbleibt sicher in ihrer Meßlage.

Der Grundgedanke der Erfindung könnte für piezoelektrisch oder auch mit Dehnungsmeßstreifen arbeitende Kraftmeßvorrichtungen angewendet werden. Bei der bevorzugten Ausführungsform handelt es sich um eine hydraulisch arbeitende Vorrichtung, bei der beiderseits der zur Seite des Gehäuse hin offenen Durchbrechung je zwei Druckaufnahmekolben vorgesehen sind, die in dem Gehäuse verschiebbar sind. Die von den Druckaufnahmekolben und dem Gehäuse eingeschlossenen Drucköräume kommunizieren untereinander und sind mit einem Rohrfedermanometer verbunden.

Zweckmäßig ist ferner beiderseits der zur Seite des Gehäuses hin offenen Durchbrechung je ein Haftmagnet vorzusehen. Die Druckmeßvorrichtung läßt sich dann noch sicherer an einer der beiden in der Regel ferrometallischen Spannflächen befestigen. Die Vorrichtung braucht dann nicht mehr bis zum Anlegen der Kraft an den Spannanker von Hand in Meßposition gehalten zu werden, was im Hinblick auf ein mögliches Verletzungsrisiko des Benutzers sehr vorteilhaft ist.

Die Erfindung und weitere zweckmäßige Einzelheiten sind im folgenden anhand eines in der Zeichnung dargestellten Ausführungsbeispiels näher erläutert. Es zeigen

Fig. 1 eine Großpresse, bei deren Wartung die Kraftmeßvorrichtung besonders vorteilhaft eingesetzt werden kann;

Fig. 2 eine vergrößerte Darstellung des Ausschnittes "Z" in Fig. 1;

Fig. 3 eine nochmals vergrößerte Darstellung der Kraftmeßvorrichtung in einer gegenüber der Fig. 2 um 180° in der Zeichenebene gedrehten Darstellung und

Fig. 4 eine Ansicht nach der Linie IV-IV gemäß Fig. 3.

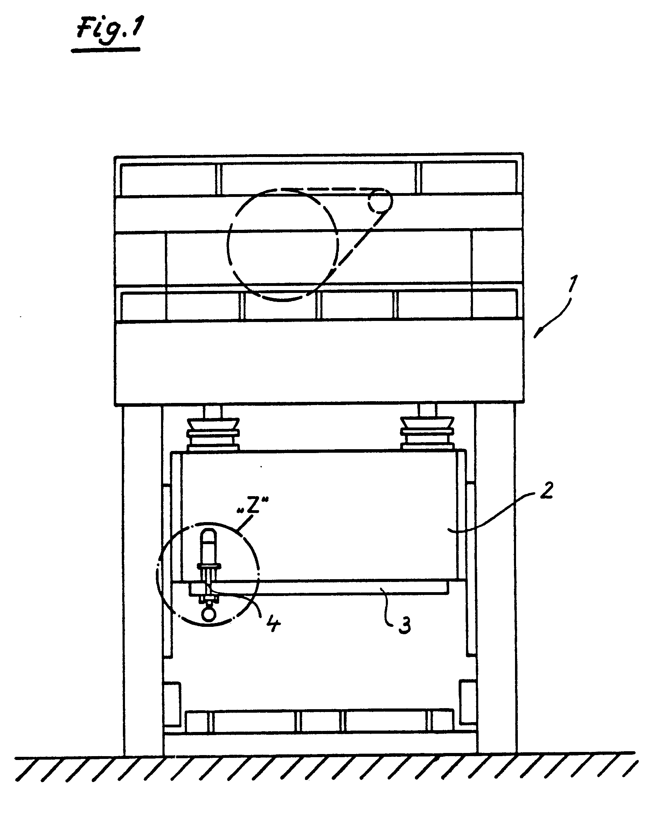

Die in Fig. 1 dargestellte Großpresse 1 weist einen vertikal verfahrbaren Stößel 2 und eine Stößelplatte 3 auf. Insbesondere um die Umrüstzeiten beim Auswechseln der Preßwerkzeuge deutlich zu reduzieren, werden neuerdings zunehmend zum Festlegen beispielsweise des Oberwerkzeuges an der Stößelplatte 3 hydraulisch-mechanisch betätigte Spannanker 4 verwendet. Die Spannanker können hierzu nach außen beispielsweise um die angedeutete Schwenkachse 5 ausschwenkbar sein. In der eingeschwenkten, vertikalen Lage liegt der Schaft 6 des Spannankers 4 in einem nach außen offenen Schlitz einer (nicht dargestellten) Werkzeugplatte eines Preßwerkzeugs. Nach dem Spannen des Spannankers preßt dieser mit seinem Kopf 7 die Werkzeugplatte gegen die Stößelplatte 3. Im Vergleich zum früher gebräuchlichen Verschrauben der Werkzeugplatte mit der Stößelplatte läßt sich dieser Vorgang wesentlich schneller bewerkstelligen und auch automatisieren. Die Zugkraft kann dabei über einen hydraulisch betätigten Kniehebel aufgebracht werden. Der Kniehebel wird dabei geringfügig über seine gestreckte Totpunktlage durchgestreckt. Nach einer gewissen Einsatzzeit des Stößels kann durch Verschleiß und gewisse Verformungen in den Lagern der Fall eintreten, daß die von dem Spannanker ausgeübte Spannkraft nicht mehr der an sich erforderlichen Spannkraft entspricht. Um dies zu erkennen und die Spannkraft bei der Wartung wieder richtig einzujustieren, wird die erfindungsgemäße Kraftmeßvorrichtung benutzt.

Bei dem in der Zeichnung erläuterten Anwendungsfall bietet die Unterseite 8 der Stößelplatte 3 die eine Spannfläche der Spannvorrichtung, während die Oberseite 9 des Kopfes 7 die andere Spannfläche bildet. Die zwischen diesen beiden Spannflächen wirkende Kraft soll gemessen werden. Der Kopf 7 kann dabei - ähnlich einem Schraubenkopf - zylindrisch sein oder aber auch flach, was sich auch dann anbietet, wenn der Spannanker nicht durch seitliches Einschwenken in die Schlitze der Werkzeugplatte eingeführt wird, sondern durch Verfahren in seiner Längsachse. Der flachliegende Kopf wird nach Durchtreten durch den Schlitz der Werkzeugplatte dann lediglich um 90° gedreht und kann die Werkzeugplatte gegen die Stößelplatte 3 spannen.

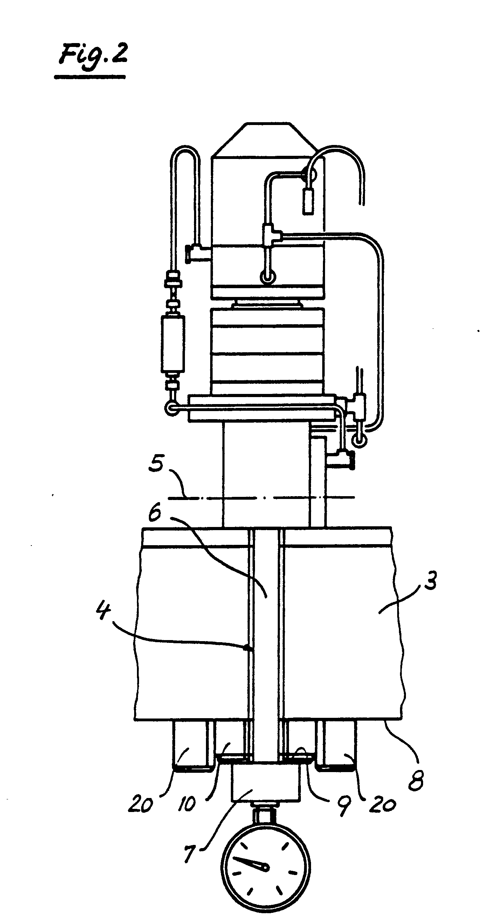

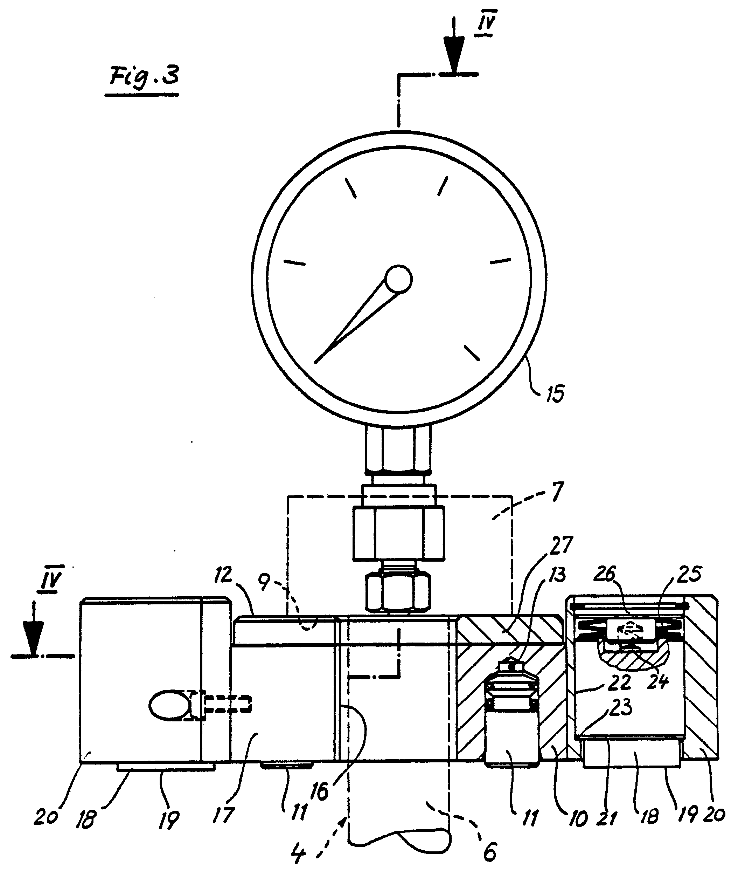

In der um 180° in der Zeichenebene gegenüber der Darstellung nach Fig. 2 gedrehten Darstellung nach Fig. 3 ist der Schaft 6 und der Kopf 7 des Spannankers 4 in strichlinierten Linien angedeutet. Mit dem Bezugszeichen 10 ist das Gehäuse der Kraftmeßvorrichtung bezeichnet, in dem vier Druckaufnahmekolben 11 verschiebbar aufgenommen sind. Der Seite 9 des Kopfes 7 ist die Abstützfläche 12 des Gehäuses 10 zugeordnet. Die von den Kolben und dem Gehäuse eingeschlossenen Druckräume stehen über Bohrungen 13 und 14 untereinander sowie mit einem Rohrfeder-Manometer 15 in Verbindung, das an das Gehäuse 10 angeschraubt ist.

Das Gehäuse 10 weist eine Durchbrechung 16 auf, die etwa von der Gehäusemitte bis zu einer zur Abstützfläche 12 senkrechten Seitenwand 17 des Gehäuses 10 reicht und zu dieser Seitenwand hin offen ist. Wie man erkennt, wird die zur Seitenwand 10 hin offene Durchbrechung 16 praktisch durch einen breiten Schlitz gebildet. Mit der Durchbrechung 16 kann das Gehäuse 10 sehr einfach über den Schaft 6 des Spannankers 4 geschoben und in Meßposition gebracht werden.

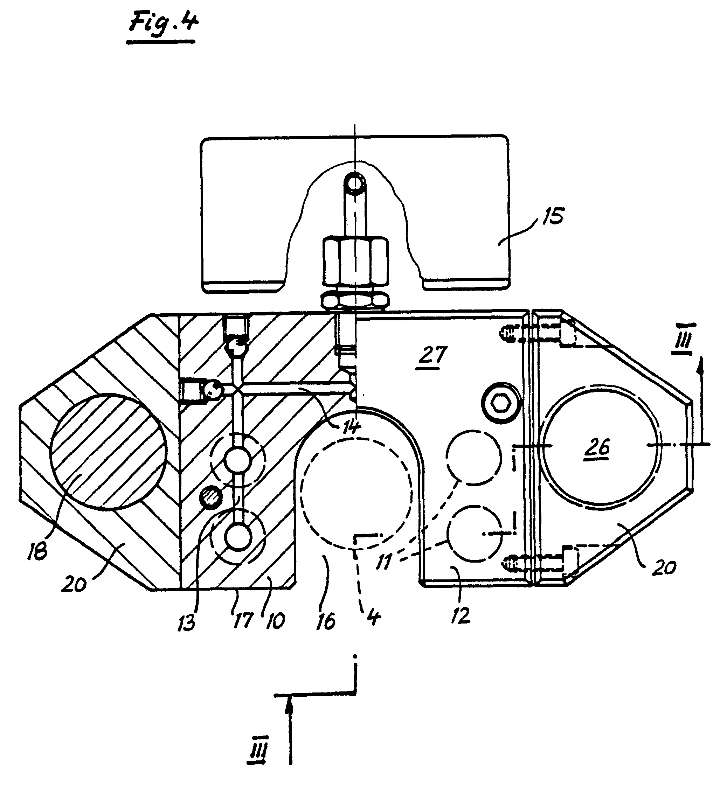

Bei der dargestellten bevorzugten Ausführungsform sind beiderseits der Durchbrechung 16 je zwei Druckaufnahmekolben 11 angeordnet (Fig. 4). Die Anordnung ist dabei so getroffen, daß der Schaft 6 des Spannankers 4 sehr genau zwischen den vier Druckaufnahmekolben 11 zu liegen kommt, wenn die Seitenfläche 17 bündig mit der entsprechenden Seitenfläche der Stößelplatte 3 verläuft.

Beiderseits der Durchbrechung ist je ein Haftmagnet 18 vorgesehen. Die Haftmagneten 18 sind bei dem dargestellten Ausführungsbeispiel Permanentmagneten. Sie könnten aber auch Elektromagneten sein.

Bei dem besonders bevorzugten Ausführungsbeispiel sind die Haftmagneten 18 parallel zur Verschieberichtung der Druckaufnahmekolben 11 gegen Federkraft verschiebbar an dem Gehäuse 10 angeordnet. Sie stehen mit ihrer Haftfläche 19 etwas über die angrenzende Gehäusewand vor. Zweckmäßig sind die Haftmagneten 18 hierbei in zwei seitlich an das Gehäuse 10 angesetzten Führungsstücken 20 geführt.

Wie man in Fig. 3 erkennt, haben die zylindrischen Haftmagneten 18 eine abgedrehte äußere Stützschulter 21, die mit einer in der Führungsbohrung 22 jedes aus Aluminium bestehenden Führungsstücks 20 ausgebildeten Gegenschulter 23 zusammenwirkt. Diese Schultern bilden Anschläge, die das Maß definieren, um das die Haftmagnete unter Federkraft über die gleiche Gehäusewand vorstehen wie die Druckaufnahmekolben 11. Die Federkraft wird dabei von einer zentralen Schraubenfeder 24 und von einem Tellerfederpaket 25 ausgeübt, die sich gegen eine in der Führungsbohrung 22 festgelegte Druckplatte 26 abstützen.

Um die Druckmeßplatte universeller für verschieden große Abstände zwischen der Unterseite 8 der Stößelplatte 3 und der Oberseite 9 des Kopfes 7 des Spannankers 4 einsetzen zu können, ist auf der den Druckaufnahmekolben 11 gegenüberliegenden Gehäusewand des Gehäuses 10 eine auswechselbare Distanzplatte 27 angeordnet, die in verschiedenen Dicken vorrätig gehalten wird.

Mit den etwa 2-3 mm über die angrenzende Gehäusewand vorstehenden Haftmagneten 18 kann die Kraftmeßvorrichtung an jeder ferrometallischen Spannfläche sicher fixiert werden. Die Druckmeßkolben 11 stehen in Ruhelage 1-2 mm über die angrenzende Gehäusewand vor. Der Öldruckraum zwischen den Druckaufnahmekolben 11 und dem Rohrfeder-Manometer ist mit entgastem Hydrauliköl gefüllt. Beim Anlegen der Kraft auf die Kraftmeßvorrichtung werden die Haftmagnete 18 gegen die Wirkung der Federn 25 und 26 in die Führungsstücke 20 eingedrückt und sodann die Druckaufnahmekolben 11 beaufschlagt. Der von den Federn aufgenommene Kraftanteil ist dabei praktisch gegenüber dem auf die Druckaufnahmekolben 11 ausgeübten Kraftanteil vernachlässigbar. Die Druckaufnahmekolben 11 sind so in dem Gehäuse 10 aufgenommen, daß ein genügend großer Verlagerungweg möglich ist, um das zu dem Rohrfedermanometer 15 verdrängte Ölvolumen ausschieben zu können.

## Patentansprüche

1. Vorrichtung zum Messen der zwischen zwei Spannflächen einer Spannvorrichtung wirkenden Kraft, mit einem Gehäuse, das mit einer Abstützfläche einer der Spannflächen zugeordnet ist, und an dem wenigstens ein mit seiner äußeren Stirnfläche der anderen Spannfläche zugeordnetes Druckaufnahmeglied vorgesehen ist, sowie ferner mit einem Anzeigeinstrument, das an das Druckaufnahmeglied angeschlossen ist, dadurch gekennzeichnet, daß das Gehäuse (10) eine Durchbrechung (16) aufweist, die etwa von der Gehäusemitte bis zu einer zur Abstützfläche (12) senkrechten Seitenwand (17) des Gehäuses (10) reicht und zu dieser Seitenwand hin offen ist.

2. Vorrichtung nach Anspruch 1, dadurch gekennzeichnet, daß die Durchbrechung (16) durch einen breiten Schlitz gebildet ist.

3. Vorrichtung nach Anspruch 1 mit wenigstens einem Druckaufnahmekolben als Druckaufnahmeglied, der im Gehäuse verschiebbar ist und ein Manometer beaufschlagt, dadurch gekennzeichnet, daß beiderseits der Durchbrechung (16) mindestens je ein Druckaufnahmekolben (11) angeordnet ist.

4. Vorrichtung nach Anspruch 1, dadurch gekennzeichnet, daß beiderseits der Durchbrechung (16) je zwei Druckaufnahmekolben (11) vorgesehen sind.

5. Vorrichtung nach Anspruch 1, dadurch gekennzeichnet, daß an dem Gehäuse (10) wenigstens ein Haftmagnet angeordnet ist.

6. Vorrichtung nach Anspruch 5, dadurch gekennzeichnet, daß beiderseits der Durchbrechung (16) je ein Haftmagnet (18) vorgesehen ist.

7. Vorrichtung nach Anspruch 5 oder 6, dadurch gekennzeichnet, daß die Haftmagnete (18) Permanentmagneten sind.

8. Vorrichtung nach Anspruch 3 und 6, dadurch gekennzeichnet, daß die Haftmagneten (18) parallel zur Verschieberichtung der Druckaufnahmekolben (11) gegen Federkraft verschiebbar an dem Gehäuse (10) angeordnet sind und mit ihrer Haftfläche (19) etwas über die angrenzende Gehäusewand vorstehen.

9. Vorrichtung nach Anspruch 8, dadurch gekennzeichnet, daß die Haftmagnete (18) in zwei seitlich an das Gehäuse (10) angesetzten Führungsstücken (20) geführt sind.

10. Vorrichtung nach Anspruch 9, dadurch gekennzeichnet, daß die zylindrischen Haftmagnete (18) eine abgedrehte äußere Stützschulter (21) haben, die mit einer in der Führungsbohrung (22) jedes Führungsstückes (20) ausgebildeten Gegenschulter (23) zusammenwirkt.

11. Vorrichtung nach Anspruch 8, dadurch gekennzeichnet, daß die Haftmagnete (18) über die gleiche Gehäusewand vorstehen wie die Druckaufnahmekolben (11).

12. Vorrichtung nach Anspruch 3, dadurch gekennzeichnet, daß auf der den Druckaufnahmekolben (11) gegenüberliegenden Gehäusewand eine auswechselbare Distanzplatte (27) angeordnet ist.

## Claims

1. Apparatus for measuring the force acting between two clamping faces of a clamping device, comprising a housing having a support face associated with one of the clamping faces and on which there is provided at least one pressure-detecting member having its outer end face associated with the other clamping face, and further having an indicating instrument which is connected to the pressure-detecting member, characterised in that the housing (10) is provided with an aperture (16) which extends approximately from the middle of the housing to a side wall (17) at right angles to the support face (12) of the housing (10) and is open to this side wall.

2. Apparatus according to Claim 1, characterised in that the aperture (16) is formed by a wide slot.

3. Apparatus according to Claim 1 having at least one pressure-detecting piston as a pressure-detecting member which is displaceable in the housing and acts upon a manometer, characterised in that at least one pressure-detecting piston (11) is arranged on each of the two sides of the aperture (16).

4. Apparatus according to Claim 1, characterised in that two pressure-detecting pistons (11) are provided on each of the two sides of the aperture (16).

5. Apparatus according to Claim 1, characterised in that at least one adherent magnet is arranged on the housing (10).

6. Apparatus according to Claim 5, characterised in that an adherent magnet (18) is provided on each of the two sides of the aperture (16).

7. Apparatus according to Claim 5 or Claim 6, characterised in that the adherent magnets (18) are permanent magnets.

8. Apparatus according to Claims 3 and 6, characterised in that the adherent magnets (18) are arranged to be displaced on the housing (10) against spring force parallel to the direction of displacement of the pressure-detecting pistons (11) and protrude with their adhesion faces (19) somewhat beyond the adjoining housing wall.

9. Apparatus according to Claim 8, characterised in that the adherent magnets (18) are guided in two guide members (20) attached laterally to the housing (10).

10. Apparatus according to Claim 9, characterised in that the adherent magnets (18) are cylindrical and have a machined-down outer support shoulder (21) which co-operates with an opposing shoulder (23) formed in the guide bore (22) of each guide member (20).

11. Apparatus according to Claim 8, characterised in that the adherent magnets (18) protrude beyond the same housing wall as do the pressure-detecting pistons (11).

12. Apparatus according to Claim 3, characterised in that a replaceable distance plate (27) is arranged on the housing wall opposite to the pressure-detecting piston (11).

## Revendications

1. Dispositif de mesure de la force agissant entre deux surfaces de serrage d'un dispositif de serrage, avec un carter, qui est coordonné avec une surface d'appui de l'une des surfaces de serrage et sur lequel est prévu au moins un organe de mesure de pression, adjoint avec sa surface frontale extérieure à l'autre surface de serrage, ainsi, qu'en outre, avec un instrument indicateur, qui est raccordé à l'organe de mesure de pression, caractérisé en ce que le carter (10) possède une découpe (16), qui va approximativement depuis le milieu du carter, jusqu'à une paroi latérale (17) du carter (10), qui est perpendiculaire à la surface d'appui (12) et s'ouvre sur cette paroi latérale.

2. Dispositif selon la revendication 1, caractérisé en ce que la découpe (16) est formée par une large fente.

3. Dispositif selon la revendication 1, avec au moins un piston d'enregistrement de pression pour organe de mesure de pression, qui est mobile dans le carter et agit sur un manomètre, caractérisé en ce qu'est disposé au moins un piston d'enregistrement de pression (11), sur chacun des deux côtés de la découpe (16).

4. Dispositif selon la revendication 1, caractérisé en ce que deux pistons d'enregistrement de pression (11) sont prévus sur chacun des deux côtés de la découpe (16).

5. Dispositif selon la revendication 1, caractérisé en ce qu'au moins un aimant de maintien est disposé sur le carter (10).

6. Dispositif selon la revendication 5, caractérisé en ce qu'un aimant de maintien (18) est prévu sur chacun des deux côtés de la découpe (16).

7. Dispositif selon la revendication 5 ou 6, caractérisé en ce que les aimants de maintien (18) sont des aimants permanents.

8. Dispositif selon la revendication 3 et 6, caractérisé en ce que les aimants de maintien (18) sont disposés de manière mobile sur le carter (10), parallèlement au sens de déplacement des pistons d'enregistrement de pression (11), contre l'action d'un ressort et émergent de leur surface de maintien, quelque peu au-dessus de la paroi limitrophe de carter.

9. Dispositif selon la revendication 8, caractérisé en ce que les aimants de maintien (18) sont guidés en deux pièces de guidage (20), apposées latéralement sur le carter (10).

10. Dispositif selon la revendication 9, caractérisé en ce que les aimants de maintien (18) cylindriques possèdent un épaulement d'appui extérieur fermé, qui agit avec un contre-épaulement (23) formé dans le perçage de guidage (22) de chaque pièce de guidage (20).

11. Dispositif selon la revendication 8, caractérisé en ce que les aimants de maintien (18) émergent de la même paroi de carter que celle des pistons d'enregistrement de pression (11).

12. Dispositif selon la revendication 3, caractérisé en ce qu'une plaque entretoise interchangeable est disposée sur la paroi de carter qui est située face aux pistons d'enregistrement de pression (11).

_Fig.1_

1

2

„Z"

3

4

Fig.2

Fig.3

*Fig.4*